# EUROPÄISCHE PATENTSCHRIFT

(11) **EP 3 097 770 B1**
(45) Veröffentlichungstag und Bekanntmachung des Hinweises auf die Patenterteilung: **06.06.2018**
(21) Anmeldenummer: 16168608.4
(22) Anmeldetag: 06.05.2016
(51) Int. Cl.: A01F 15/18

(54) **LANDWIRTSCHAFTLICHE RUNDBALLENPRESSE**
AGRICULTURAL ROUND BALER
PRESSE AGRICOLE À BALLES RONDES

(30) Priorität: 11.05.2015 DE 102015208675
(43) Veröffentlichungstag der Anmeldung: 30.11.2016
(73) Patentinhaber: Deere & Company, Moline, IL 61265 (US)
(72) Erfinder: Chapon, Emmanuel, 70100 Velet (FR); Delphigue, Didier, 21000 Dijon (FR)
(74) Vertreter: Reichert, Christian

(56) Entgegenhaltungen:
- EP-A1- 1 623 619
- EP-A1- 1 927 279
- DD-A5- 295 070
- DE-A1- 4 019 335

## Beschreibung

Die Erfindung betrifft eine landwirtschaftliche Rundballenpresse mit einer Ballenpresskammer aus mehreren angetriebenen und über einen Umfang der Ballenpresskammer angeordneten Pressrollen durch welche eine rotationserzeugende oder rotationserhaltene Eingriffswirkung auf einen in der Ballenpresskammer befindlichen Rundballen erzeugbar ist, wobei die Ballenpresskammer eine Öffnung aufweist, durch welche der gepresste Rundballen entladen werden kann. Eine derartige landwirtschaftliche Rundballenpresse ist z.B. aus dem Dokument EP 1 927 279 A1 bekannt. Landwirtschaftliche Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Ballenpresskammer umfasst mehrere in einem Kreis angeordnete Pressrollen, die sich über die Breite der Ballenpresskammer zwischen zwei Seitenwänden erstrecken und rotatorisch angetrieben sind. Zur besseren Mitnahme bzw. besseren Beförderung des in die Presskammer eingeführten Ernteguts sind die Pressrollen mit mehreren über den Umfang der Pressrollen verteilte Längsrippen oder Längsstege versehen, die, sich in radiale Richtung erstreckende, Erhebungen darstellen und sich über die Länge der Pressrolle erstecken. Die Rundballenpressen sind in der Regel mit einem zweigeteilten Gehäuse ausgebildet, wobei ein hinterer Teil hochgeklappt wird und eine Austrittsöffnung für einen gepressten Rundballen bildet. Das Öffnen erfolgt am Ende eines Pressvorgangs, wobei es insbesondere wichtig ist, dass der Rundballen bis zuletzt in einer steten Drehbewegung gehalten wird, nicht zuletzt auch um eine Netz- oder Garnbindung abzuschließen. Zum Entladen des Rundballens entsteht beim Öffnen des zweigeteilten Gehäuses ein Öffnungsspalt zwischen einem vorderen und einem hinteren Gehäuseteil, wodurch die Geometrie im Pressraum derart verändert wird, dass die Anordnung der Pressrollen zunehmend von einer Zylinderform abweicht da sich insbesondere der Abstand zwischen den unmittelbar an der Öffnung befindlichen Pressrollen vergrößert und sich die zuvor zylindrisch um den Rundballen angeordneten Pressrollen zunehmend von einer zylindrischen Umfangsfläche wegbewegen. Problematisch wirkt sich dies oftmals darin aus, dass eine rotationserzeugende oder rotationserhaltene Eingriffswirkung der Pressrollen auf den Rundballen zu früh abbrechen kann und der Rundballen nicht ausreichend lang in Rotation gehalten wird. Insbesondere bei trockenem Erntegut kann sich dieses Problem einstellen. Um dieses Problem zu beheben sind Versuche unternommen worden, die Eingriffsstärke der Pressrollen durch einen Zusammenschluss mehrerer Pressrollen mit einem Fördergurtsystem zu erhöhen. Dies kann sich jedoch auch negativ auf die Presseigenschaften bei feuchteren Erntebedingungen auswirken, weshalb spezielle Nachrüstsätze angeboten werden, die ein Nachrüsten des genannten Fördergurtsystems für trockene Erntebedingungen ermöglichen. Dies ist jedoch mit erheblichem Aufwand verbunden.

Die der Erfindung zugrunde liegende Aufgabe wird darin gesehen, eine Pressrolle der eingangs genannten Art anzugeben, durch welche das oben genannte Problem behoben bzw. gemildert wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine landwirtschaftliche Rundballenpresse der eingangs genannten Art an einer Unterseite der Ballenpresskammer unmittelbar rückseitig der Öffnung und unmittelbar vorderseitig der Öffnung angeordnete Pressrollen auf, die eine Beschaffenheit mit einer stärkeren Eingriffswirkung auf den Ballen aufweisen, als die übrigen Pressrollen. Die spezielle Beschaffenheit mit stärkerer Eingriffswirkung auf die Rundballenumfangsfläche der unmittelbar neben der Öffnung gelegenen Pressrollen, sei es eine Oberflächenbeschaffenheit oder aucheine Form- oder Größenbeschaffenheit, bewirkt eine durch die Pressrollen auf den Rundballenumfangsfläche stärker ausgeübte Mitnahmewirkung, so dass der Rundballen ausreichend lange in Rotation gehalten wird. Auch wenn sich die übrigen Pressrollen zunehmend während des Öffnens des Gehäuses von der Rundballenoberfläche entfernen, können die unterhalb, unmittelbar an der Öffnung gelegenen Pressrollen, die Rotation des Rundballens aufrecht erhalten, da das Gewicht des Rundballens mit zunehmendem Öffnungsspalt der Öffnung auch zunehmend auf den genannten beiden Pressrollen lastet und somit die eingriffsstärkere Beschaffenheit der beiden Pressrollen auch stärker zum Tragen kommt. Dadurch kann eine durch die übrigen Pressrollen hervorgerufene abnehmende Rotationsantriebswirkung durch die beiden an der Öffnung gelegenen Pressrollen zunehmend kompensiert werden.

Die Pressrollen können auf ihren Mantelflächen mit einer Anzahl von Erhebungen ausgebildet sein, wobei auf wenigstens einer der unmittelbar rückseitig der Öffnung oder unmittelbar vorderseitig der Öffnung angeordneten Pressrollen die Anzahl der Erhebungen größer ist, als an den übrigen Pressrollen. Das Merkmal einer eingriffsstärkeren Beschaffenheit ist dabei durch die höhere Anzahl von Erhebungen geprägt, durch welche letztendlich die Eingriffswirkung auf die Rundballenumfangsfläche, also eine durch die Pressrolle auf den Rundballenumfangsfläche ausgeübte Mitnahmewirkung, stärker ausgebildet wird.

Die Pressrollen können auf ihren Mantelflächen mit einer Anzahl von Erhebungen ausgebildet sein, wobei auf wenigstens einer der unmittelbar rückseitig der Öffnung oder unmittelbar vorderseitig der Öffnung angeordneten Pressrollen die Erhebungen in ihrer Form verschieden zu den Erhebungen der übrigen Pressrollen ausgebildet sind. Beispielsweise sind die Erhebungen dort spitzer oder mit schärferen Kanten ausgebildet und/oder erstrecken sich radial in einem höheren Maß von der Mantelfläche der Pressrolle, so dass die Eingriffswirkung auf die Rundballenumfangsfläche, also eine durch die Pressrolle auf den Rundballenumfangsfläche ausgeübte Mitnahmewirkung, stärker ausgebildet ist.

Ferner kann wenigstens eine der unmittelbar rückseitig der Öffnung oder unmittelbar vorderseitig der Öffnung angeordneten Pressrollen eine Haftung oder Reibschluss steigernde Beschichtung umfassen. Durch den erhöhten bzw. gesteigerten Haft- oder Reibschluss mit der Rundballenoberfläche wird die Eingriffswirkung auf die Rundballenumfangsfläche, also eine durch die Pressrolle auf den Rundballenumfangsfläche ausgeübte Mitnahmewirkung, stärker ausgebildet.

Ferner kann wenigstens eine der unmittelbar rückseitig der Öffnung oder unmittelbar vorderseitig der Öffnung angeordneten Pressrollen einen größeren Durchmesser aufweisen als die übrigen Pressrollen. Durch den größeren Durchmesser wird die Anpresskraft auf die Rundballenumfangsfläche und damit auch der Reib- bzw. Haftschluss zwischen Pressrolle und Rundballenumfangsfläche erhöht, was wiederum die Eingriffswirkung auf die Rundballenumfangsfläche, also eine durch die Pressrolle auf den Rundballenumfangsfläche ausgeübte Mitnahmewirkung, stärker ausbildet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer landwirtschaftlichen Rundballenpresse mit Pressrollen und Öffnung zum Entladen eines gepressten Rundballens,
Fig. 2 einen vergrößerten Ausschnitt mit Pressrollen unmittelbar rückseitig und unmittelbar vorderseitig der Öffnung aus Figur 1, in einer ersten Ausführungsform,
Fig. 3 einen vergrößerten Ausschnitt gemäß Figur 2 mit Pressrollen in einer zweiten Ausbildungsform und
Fig. 4 einen vergrößerten Ausschnitt gemäß Figur 2 mit Pressrollen in einer weiteren Ausbildungsform.

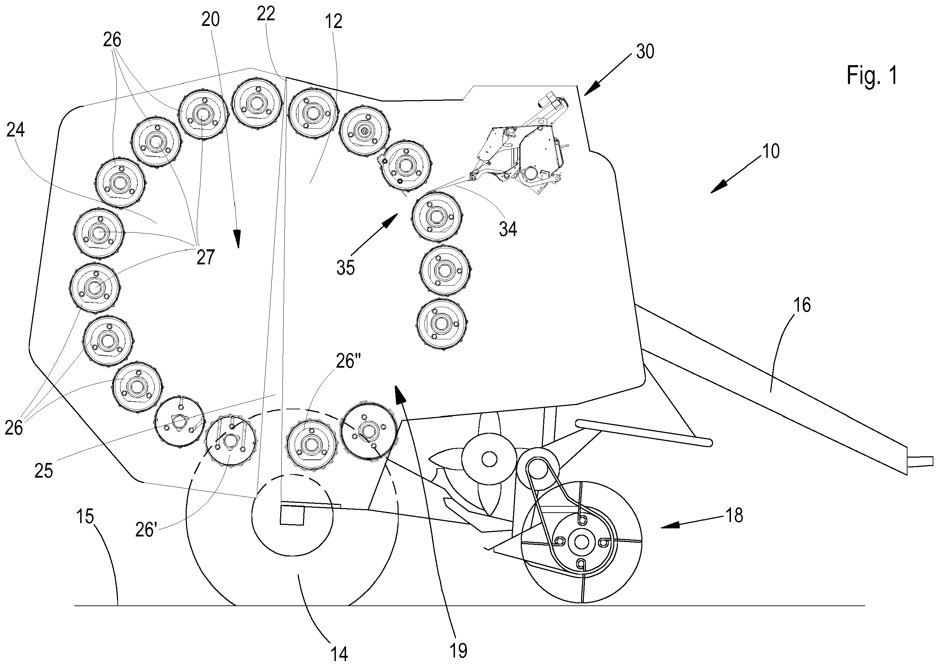

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Zuführeinrichtung 18 für Erntegut, die geschnittenes Erntegut durch einen Einführkanal 19 in eine Ballenpresskammer 20 fördert, wobei der erste Gehäuseteil 12 einen vorderen Teil der Ballenpresskammer 20 umgibt. An dem rückwärtigen oberen Eckbereich des ersten Gehäuseteils 12 befindet sich ein Lager 22 für ein schwenkbares zweites Gehäuseteil 24, das einen hinteren Teil der Ballenpresskammer 20 umgibt. Das zweite Gehäuseteil 24 gibt im geöffneten Zustand eine Öffnung 25 frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Ballenpresskammer 20 gepressten Ballen dar.

Die Rundballenpresse 10, mit größenunveränderlicher Ballenpresskammer 20 ausgebildet, enthält eine Vielzahl zueinander parallel verlaufender Pressrollen in Form von Pressrollen 26 (exemplarisch wurden hier nur einige wenige Pressrollen 26 mit dem Bezugszeichen "26" versehen), deren Rollachsen 27 bei geschlossenem zweiten Gehäuseteil 24 auf einem Kreisbogen gelegen sind, und von denen wenigstens einige angetrieben sind. Die Pressrollen 26 dienen, neben einem Pressen und einer Formgebung, insbesondere auch einer Rotationserzeugung oder einer Rotationserhaltung eines in der Presskammer 20 enthaltenen Rundballens (nicht gezeigt). Unmittelbar rückseitig und vorderseitig der Öffnung 25, zum Entladen eines gepressten Ballens, sind Pressrollen 26' und 26" angeordnet, die gegenüber den übrigen Pressrollen 26 eine Beschaffenheit mit einer stärkeren Eingriffswirkung auf den Ballen aufweisen. Die Rundballenpresse 10 ist hier exemplarisch zur Darstellung der Öffnung 25 mit leicht geöffnetem hinterem Gehäuseteil 24 abgebildet. Während eines Pressvorgangs ist dieser jedoch geschlossen.

Ferner umfasst die Rundballenpresse 10 eine Ballenwickeleinrichtung 30, die mit einer Vorratsrolle (nicht gezeigt) für Umwicklungsmaterial bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial, mittels welcher das Umwicklungsmaterial von der Vorratsrolle durch eine Einführöffnung 35 in die Ballenpresskammer 20 geführt wird.

Nachdem der eigentliche Pressvorgang, also die Erntegutaufnahme und Bildung eines Rundballens durch die Pressrollen 26, 26', 26" abgeschlossen ist, wird eine Fahrt über den Boden 15 unterbrochen, da die Rundballenpresse 10 mit dem Rundballen gefüllt ist und kein weiteres Erntegut mehr in die Ballenpresskammer 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich in der Ballenpresskammer 20 befindlichen Rundballens das Umwicklungsmaterial um den Rundballen 20 gewickelt. Nachdem ein Umwicklungsvorgang abgeschlossen ist wird der Rundballen mittels Öffnen der Auslassklappe (zweiter Gehäuseteil 24) durch die Öffnung 25 über einer Entladerampe (nicht gezeigt) auf dem Boden 15 abgelassen. Sodann wird die Fahrt mit der Rundballenpresse 10 wieder aufgenommen und ein neuer Pressvorgang beginnt.

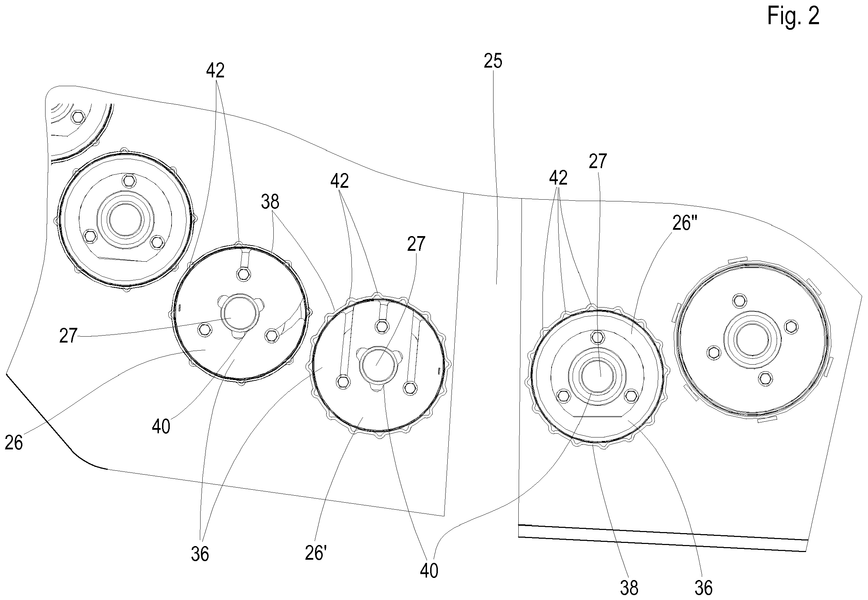

Der Bereich um die auf der Unterseite der Rundballenpresse 10 rückseitig und vorderseitig der Öffnung 25 angeordneten Pressrollen 26', 26" ist in einem vergrößerten Ausschnitt in Figur 2 dargestellt.

Wie in Figur 2 dargestellt ist, umfassen die Pressrollen 26, 26', 26" einen Rollenkörper 36, der von einer Mantelfläche 38 umschlossen wird. Der Rollenkörper 36 ist als zylindrisches Rohrprofil ausgebildet und kann beispielsweise aus einem Blechmaterial in einem Umformverfahren bzw. Walzverfahren geformt sein. Der Rollenkörper 36 weist an seinen Endbereichen Achsnaben 40 auf, die in das Rohrprofil eingepasst sind und der Halterung bzw. Lagerung der Rollachsen 27 dienen.

Jeweils auf den Mantelflächen 38 sind Rippen 42 angeordnet, die durch Erhebungen gebildet werden, die auf bzw. in der Mantelfläche 38 entlang der Rollachsen 27 des Rollenkörpers 36 über im Wesentlichen die gesamte Länge des Rollenkörpers 36 ausgebildet sind. Die Erhebungen können beispielsweise durch ein Blechumformverfahren in das Blechmaterial des Rollenkörpers 36 eingeformt oder auch durch Aufschweißungen von Blechstreifen auf die Mantelfläche 38 aufgebracht werden.

Das in den Figuren 1 und 2 dargestellte Ausführungsbeispiel zeigt eine Pressrolle 26 mit beispielhaft 8 auf dem Umfang des diesbezüglichen Rollenkörpers 36 gleichmäßig verteilten Rippen 42. Die auf der Unterseite der Rundballenpresse 10 rückseitig und vorderseitig der Öffnung 25 angeordneten Pressrollen 26', 26" sind hingegen mit einer höheren Anzahl von Rippen 42 versehen, hier beispielhaft mit 16 Rippen 42. Die höhere Anzahl von Rippen 42 an den Pressrollen 26' und 26" stellt eine zu den übrigen Pressrollen 26 verschiedene Beschaffenheit, insbesondere der Oberflächenbeschaffenheit der Pressrollen 26', 26" dar, wodurch eine stärkere Eingriffswirkung auf einen zu pressenden Ballen geschaffen wird, d.h. die Pressrollen 26' und 26" wirken mit größerer Aggressivität auf die Umfangsfläche eines zu pressenden Ballens ein, als die übrigen Pressrollen 26. Die stärkere Eingriffswirkung kommt zudem verstärkt zum Tragen, wenn der fertig gepresste Ballen entladen werden soll und sich das Gewicht des Ballens bei sich öffnendem hinteren Gehäuseteil 24 zunehmend auf die Pressrollen 26' und 26" verlagert. Wie in Figur 1 zu sehen ist, müssen nicht alle Pressrollen 26 mit 8 Rippen 42 bestückt sein, insbesondere nicht diejenigen, die neben einer Ballenmitnahme- und Formgebungs- bzw. Pressfunktion auch noch weitere Funktionen innehaben und beispielsweise in einer Einführöffnung 35 für Garn- oder Netzmaterial oder in einem Einführkanal 19 für Erntegut angeordnet sind. Diese können aus technischen Gründen auch mit weniger Rippen 42 bestückt sein. Dies ist jedoch nicht zwingend der Fall, so dass in anderen Ausführungsformen durchaus auch alle übrigen Pressrollen 26 mit 8 Rippen besetzt sind. Ferner sei darauf hingewiesen, dass die Auswahl von 8 Rippen 42 an den Pressrollen 26 und 16 Rippen 42 an den Pressrollen 26', 26" hier als Beispiel gewählt wurde. Es sind aber insgesamt auch mehr oder weniger Rippen 42 anordbar.

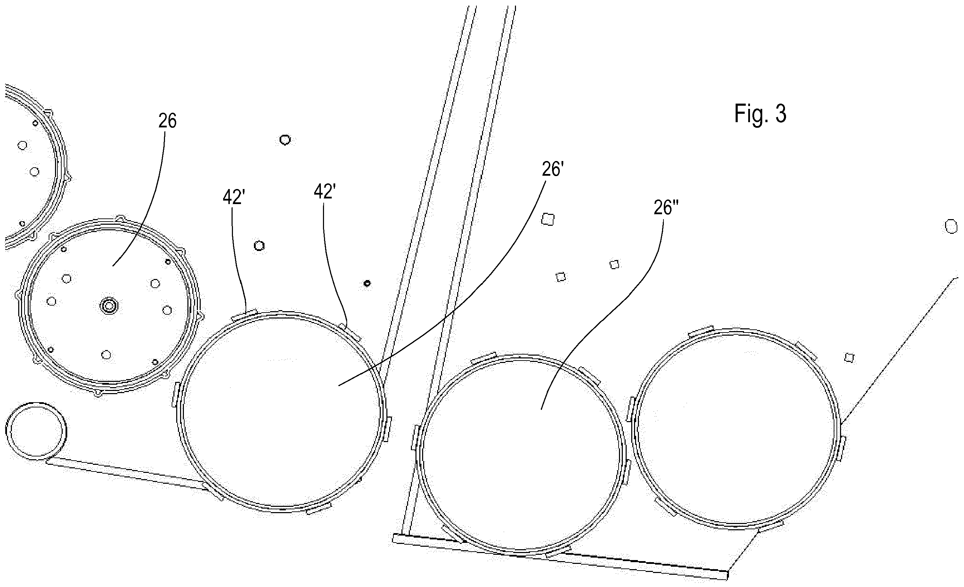

Eine erste alternative Ausführungsform ist in Figur 3 abgebildet, wobei die auf der Unterseite der Rundballenpresse 10 rückseitig und vorderseitig der Öffnung 25 angeordneten Pressrollen 26', 26" ebenfalls mit einer zu den übrigen Pressrollen 26 unterschiedlichen Beschaffenheit mit stärkerer Eingriffswirkung auf den Ballen ausgebildet sind. Hierbei ist die unterschiedliche Beschaffenheit der Pressrollen 26', 26" dadurch geschaffen, dass diese im Vergleich zu den übrigen Pressrollen 26 zum einen im Durchmesser größer ausgebildet und zum anderen gegenüber den übrigen Pressrollen mit andersförmigen Rippen 42' versehen. Die andersförmigen Rippen 42' weisen schroffe Kanten auf, die eine stärkere Eingriffswirkung auf den Ballen hervorrufen als die an den übrigen Pressrollen 26 ausgebildeten Rippen 42. Ein größerer Durchmesser bewirkt einen erhöhten Anpressdruck der Pressrollen 26', 26" und damit auch eine stärkere Eingriffswirkung auf den Ballen. Es sei erwähnt, dass hier nur beispielhaft ein größerer Durchmesser in Kombination mit schroff kantigen Rippen 42' gewählt wurde. Es ist jedoch ebenso möglich, nur eine der beiden Beschaffenheitsänderungen vorzunehmen, oder gar die aus Figur 2 gewählte Ausführungsform der Rippen 42 mit einem größeren Durchmesser der Pressrollen 26', 26" zu wählen. Es sei ferner darauf hingewiesen, dass auch andere Formen für die Rippen 42, 42' möglich sind und die hier gewählten Formen nur exemplarischer Natur sind.

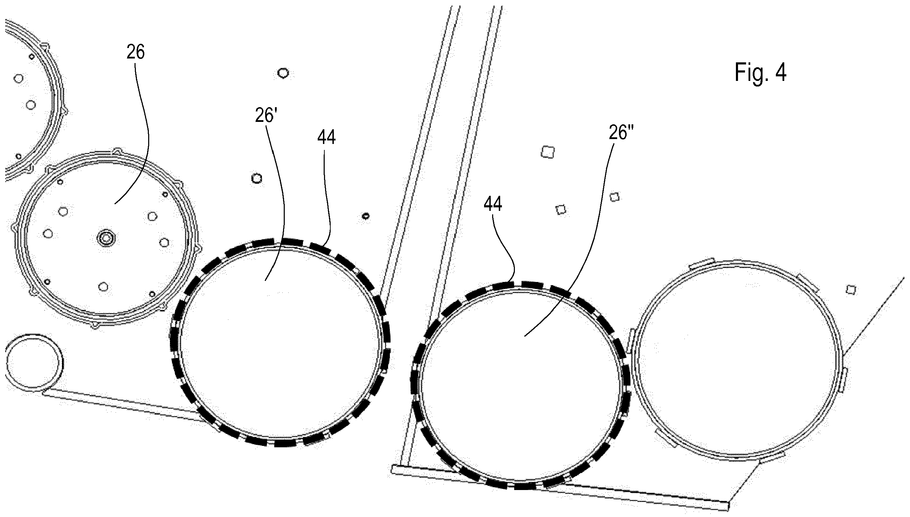

Eine weitere alternative Ausführungsform ist in Figur 4 abgebildet, wobei die auf der Unterseite der Rundballenpresse 10 rückseitig und vorderseitig der Öffnung 25 angeordneten Pressrollen 26', 26" ebenfalls mit einer zu den übrigen Pressrollen 26 unterschiedlichen Beschaffenheit mit stärkerer Eingriffswirkung auf den Ballen ausgebildet sind. Hierbei ist die unterschiedliche Beschaffenheit der Pressrollen 26', 26" dadurch geschaffen, dass diese im Vergleich zu den übrigen Pressrollen 26 auf ihrem Umfang mit einer die Haftung oder Reibung verstärkenden Beschichtung 44, beispielsweise Gummi, versehen sind. Durch die haftungs- bzw. reibungssteigernde Beschichtung 44 wird eine stärkere Eingriffswirkung auf den Ballen hervorrufen als durch die an den übrigen Pressrollen 26 ausgebildeten Rippen 42. Wie in Figur 4 dargestellt ist, kann auch hier in Kombination ein größerer Durchmesser der Pressrollen 26', 26" gewählt werden, wodurch, wie bereits beschrieben, der Effekt einer stärkeren Eingriffswirkung auf den Ballen noch erhöht werden kann. Es ist jedoch ebenso möglich, nur eine der beiden Beschaffenheitsänderungen vorzunehmen.

## Patentansprüche

1. Landwirtschaftliche Rundballenpresse (10) mit einer Ballenpresskammer (20) aus mehreren angetriebenen und über einen Umfang der Ballenpresskammer (20) angeordneten Pressrollen (26, 26', 26") durch welche eine rotationserzeugende oder rotationserhaltene Eingriffswirkung auf einen in der Ballenpresskammer (20) befindlichen Rundballen erzeugbar ist, wobei die Ballenpresskammer (20) eine Öffnung (25) aufweist, durch welche der gepresste Rundballen entladen werden kann, **dadurch gekennzeichnet, dass** an einer Unterseite der Ballenpresskammer (10) jeweils die unmittelbar rückseitig der Öffnung und unmittelbar vorderseitig der Öffnung angeordnete Pressrolle (26', 26") eine Beschaffenheit mit einer stärkeren Eingriffswirkung auf den Rundballen aufweist, als die übrigen Pressrollen (26).

2. Landwirtschaftliche Rundballenpresse (10) nach Anspruch 1, **dadurch gekennzeichnet, dass** die Pressrollen (26, 26', 26") mit einer Anzahl auf ihrer Mantelfläche (26, 26', 26") ausgebildeten Erhebungen versehen sind, wobei auf wenigstens einer der unmittelbar rückseitig der Öffnung oder unmittelbar vorderseitig der Öffnung angeordneten Pressrollen (26', 26") die Anzahl der Erhebungen größer ist als an den übrigen Pressrollen (26).

3. Landwirtschaftliche Rundballenpresse (10) nach Anspruch 1 oder 2, **dadurch gekennzeichnet, dass** die Pressrollen (26, 26', 26") mit einer Anzahl auf ihrer Mantelfläche (26, 26', 26") ausgebildeten Erhebungen versehen sind, wobei auf wenigstens einer der unmittelbar rückseitig der Öffnung oder unmittelbar vorderseitig der Öffnung angeordneten Pressrollen (26', 26") die Erhebungen in ihrer Form verschieden zu den Erhebungen der übrigen Pressrollen (26) ausgebildet sind.

4. Landwirtschaftliche Rundballenpresse (10) nach einem der Ansprüche 1 bis 3, **dadurch gekennzeichnet, dass** wenigstens eine der unmittelbar rückseitig der Öffnung oder unmittelbar vorderseitig der Öffnung angeordneten Pressrollen (26', 26") eine Haftung oder Reibschluss steigernde Beschichtung umfasst.

5. Landwirtschaftliche Rundballenpresse (10) nach einem der Ansprüche 1 bis 4, **dadurch gekennzeichnet, dass** wenigstens eine der unmittelbar rückseitig der Öffnung oder unmittelbar vorderseitig der Öffnung angeordneten Pressrollen (26', 26") einen größeren Durchmesser aufweist als die übrigen Pressrollen (26).

## Claims

1. Agricultural round baler (10) with a baling chamber (20) consisting of a plurality of driven pressing rollers (26, 26', 26'') which are arranged over a circumference of the baling chamber (20) and by means of which a rotation-generating or rotation-obtained engagement action on a bale located in the baling chamber (20) can be produced, wherein the baling chamber (20) has an opening (25) through which the pressed bale can be discharged, **characterized in that**, on a lower side of the baling chamber (10), the pressing roller (26', 26") which is arranged directly on the rear side of the opening and directly on the front side of the opening in each case has a composition having a greater engagement action on the bale than the remaining pressing rollers (26).

2. Agricultural round baler (10) according to Claim 1, **characterized in that** the pressing rollers (26, 26', 26'') are provided with a number of elevations formed on their lateral surface (26, 26', 26''), wherein the number of elevations is greater on at least one of the pressing rollers (26', 26'') arranged directly on the rear side of the opening or directly on the front side of the opening than on the remaining pressing rollers (26).

3. Agricultural round baler (10) according to Claim 1 or 2, **characterized in that** the pressing rollers (26, 26', 26'') are provided with a number of elevations formed on their lateral surface (26, 26', 26''), wherein the elevations are designed differently in their shape on at least one of the pressing rollers (26', 26'') arranged directly on the rear side of the opening or directly on the front side of the opening than the elevations of the remaining pressing rollers (26).

4. Agricultural round baler (10) according to one of Claims 1 to 3, **characterized in that** at least one of the pressing rollers (26', 26'') arranged directly on the rear side of the opening or directly on the front side of the opening comprises a coating increasing the adhesion or frictional connection.

5. Agricultural round baler (10) according to one of Claims 1 to 4, **characterized in that** at least one of the pressing rollers (26', 26'') arranged directly on the rear side of the opening or directly on the front side of the opening has a larger diameter than the remaining pressing rollers (26).

## Revendications

1. Presse agricole (10) à balles rondes présentant une chambre (20) de compression de balles et plusieurs rouleaux de compression (26, 26', 26") disposés à la périphérie de la chambre (20) de compression de balles et par lesquels une action de mise en rotation ou de rotation peut être appliquée sur une balle ronde située dans la chambre (20) à balles rondes, la chambre (20) de compression de balles présentant une ouverture (25) par laquelle les balles rondes comprimées peuvent être déchargées,
**caractérisée en ce que**
sur le côté inférieur de la chambre (10) de compression de balles, chaque rouleau de pressage (26', 26'') disposé directement en arrière de l'ouverture et directement en avant de l'ouverture présente une surface dont l'action sur les balles rondes est plus forte que les autres rouleaux de pressage (26).

2. Presse agricole (10) à balles rondes selon la revendication 1, **caractérisée en ce que** les rouleaux de pressage (26, 26', 26") sont dotés de plusieurs rehaussements formés sur leur surface d'enveloppe (26, 26', 26''), le nombre des rehaussements étant plus élevé sur au moins un des rouleaux de pressage (26', 26") disposés immédiatement en arrière de l'ouverture ou immédiatement en avant de l'ouverture que sur les autres rouleaux de pressage (26).

3. Presse agricole (10) à balles rondes selon les revendications 1 ou 2, **caractérisée en ce que** les rouleaux de pressage (26, 26', 26'') sont dotés de plusieurs rehaussements formés sur leur surface d'enveloppe (26, 26', 26''), la forme des rehaussements formés sur au moins sur au moins un des rouleaux de pressage (26', 26'') disposés immédiatement en arrière de l'ouverture ou immédiatement en avant de l'ouverture étant différente de celle des rehaussements formés sur les autres rouleaux de pressage (26).

4. Presse agricole (10) à balles rondes selon les revendications 1 à 3, **caractérisé en ce qu'**au moins l'un des rouleaux de pressage (26', 26'') disposés immédiatement en arrière de l'ouverture ou immédiatement en avant de l'ouverture présente un revêtement qui augmente l'adhérence ou le frottement.

5. Presse agricole (10) à balles rondes selon les revendications 1 à 4, **caractérisé en ce qu'**au moins l'un des rouleaux de pressage (26', 26'') disposés immédiatement en arrière de l'ouverture ou immédiatement en avant de l'ouverture présente un diamètre plus grand que les autres rouleaux de pressage (26).
